# EUROPEAN PATENT APPLICATION

(11) **EP 4 390 841 A1**
(43) Date of publication of application: **26.06.2024**
(21) Application number: 22215095.5
(22) Date of filing: 20.12.2022
(51) Int. Cl.: G06T 7/11, G06T 7/174

(54) **IMAGE ACQUISITION METHOD**

(71) Applicant: Koninklijke Philips N.V., 5656 AG Eindhoven (NL)
(72) Inventor: LOSSAU, Tanja, Eindhoven (NL); GOOßEN, Andre, Eindhoven (NL); GESSERT, Nils Thorben, 5656AG Eindhoven (NL); WEBER, Frank Michael, Eindhoven (NL); WAECHTER-STEHLE, Irina, Eindhoven (NL); WEHLE, Simon, Eindhoven (NL); PETERS, Jochen, Eindhoven (NL); WILD, Sebastian, Eindhoven (NL)
(74) Representative: Philips Intellectual Property & Standards

(57) **Abstract**

A medical imaging and segmentation method comprising utilizing segmentation results obtained for 3D frames earlier in a same imaging session to initialize a segmentation model for subsequent 3D frames. This accelerates and stabilizes segmentation results, particularly in the context of a scanning procedure in which segmentation is performed in real time (on-the-fly) for each acquired frame.

## Description

### FIELD OF THE INVENTION

The present invention relates to the field of medical image acquisition, in particular to methods for user-guided image acquisition.

### BACKGROUND OF THE INVENTION

Within the context of medical imaging, it is often necessary to acquire a standardized set of image views of a certain anatomy. For example, the standard echocardiography protocol includes acquisition of the following views: Parasternal Long Axis, Parasternal Short Axis, Apical 4 Chamber, Subxiphoid (Subcostal), and Inferior Vena Cava view. Fetal ultrasound imaging also involves acquisition of a sequence of views in order to capture standard fetal measurements, e.g. biparietal diameter (BPD), head circumference (HC), abdominal circumference (AC), and femur length (FL).

One approach to doing this is to acquire one or more 3D images and to extract the necessary planes from the 3D image. This has the advantage that a user does not need to precisely position the ultrasound imaging probe for each required planar view. Instead a more limited set of one or more 3D images can be acquired and the necessary view planes extracted as 2D images from the 3D image data.

Methods exist for automatically extracting from a 3D ultrasound image a set of one or more 2D planes. At least a subset of these methods employ use of anatomical segmentation algorithms to identify anatomical landmarks and then to identify the target planes through the imaged volume with reference to the anatomical landmarks. Model based segmentation can be used. Alternatively, use can be made of machine learning based segmentation algorithms.

In at least one implementation approach, the planes are extracted in real time and displayed to the user on-the-fly. This provides valuable guidance and may lead to shorter scan duration and more stable extraction of the 2D planes. The latter effect also results in more reliable derived measurements. Real time plane extraction requires rapid processing and places constraints on the computational complexity of the segmentation algorithms that are employed.

However, during a scan, there is movement both of the operative scanning head (e.g. the ultrasound transducer probe) as well as movement of the patient, e.g. motion associated with breathing. As a result, the anatomical plane positions are changing over time. Stability in plane extraction and of measurement is thus a challenge.

Thus, there is a tension between the demand for real-time plane extraction and the demand for stable and accurate plane extraction. A computer-implemented method offering improved optimization of these two requirements would be of advantage.

### SUMMARY OF THE INVENTION

The invention is defined by the claims.

According to examples in accordance with an aspect of the invention, there is provided a computer-implemented method, comprising: receiving, during an imaging session, a medical imaging data stream comprising a series of medical imaging data frames of an anatomical object; retrieving a segmentation model comprising one or more anatomical segmentation algorithms, the segmentation model configured to receive as input a medical imaging data frame and to generate as output a segmentation result; and for each medical imaging data frame of the series, performing a segmentation operation.

The segmentation operation comprises: applying an initialization procedure to initialize the segmentation model; applying the segmentation model to the current medical imaging data frame to obtain a segmentation result for the current medical imaging data frame; and accessing a segmentation datastore and storing the segmentation result for the current ultrasound data frame in the segmentation datastore.

With regards to the initialization procedure, this comprises: accessing the segmentation datastore; identifying in the datastore stored segmentation results for at least one previous medical imaging data frame of the current imaging session; and initializing the segmentation model using the segmentation result for the at least one previous medical imaging data frame of the current imaging session recorded in the segmentation datastore.

Embodiments of the proposed invention are based on the insight that segmentation results obtained for previous image frames during the imaging session can be used to initialize a segmentation model used to segment a current image frame, so as to accelerate and also stabilize the sequence of segmentation results.

The segmentation model may be retrieved from a datastore or memory which stores the model.

The medical imaging data stream may in some embodiments be an ultrasound imaging data stream comprising ultrasound imaging data frames. In some embodiments, the anatomical object is the heart or a portion thereof.

In some embodiments, the method, e.g. the initialization procedure, may comprise a step of checking whether the segmentation datastore contains a segmentation result for at least one prior medical imaging data frame of the current imaging session. Responsive to the datastore containing a segmentation result for at least one prior medical imaging data frame of the current imaging session, the initialization procedure may comprise initializing the segmentation model using the segmentation result for the at least one previous medical imaging data frame of the current imaging session recorded in the segmentation datastore. Responsive to the datastore not containing a segmentation result for at least one prior medical imaging data frame of the current imaging session, the initialization procedure may comprise initializing the segmentation model using a generic initialization state. The generic initialization state may be stored in a memory or datastore. It may be stored in the aforementioned segmentation datastore for example. Alternatively, it may be included as a native part of the segmentation model.

In this way, the method may differently initialize the model depending upon whether previous segmentation results are or are not available. For example, at a start of the imaging session, no previous segmentation results may yet be available.

In some embodiments, the segmentation operation further comprises configuring a computational complexity level of the segmentation model in advance of applying the segmentation model. In particular, it is the realization of the inventors that where previous segmentation results can be employed to initialize the segmentation model, then a segmentation model with less computational complexity can be used without diminishing accuracy of results. This helps to improve temporal resolution and reduces processing demand. For example, it is proposed to use higher computational complexity for a first segmentation operation (where no previous segmentation results are yet available), and lower computational complexity for the subsequent segmentation operations, where previous segmentation results are available.

For avoidance of doubt, the term `computational complexity' is a term of art in the field of computer science and the skilled person will understand its meaning.

In some embodiments, the configuring of the computational complexity level of the segmentation model comprises switching the model between different computational complexity modes, wherein, in each mode, a different respective set of one or more segmentation algorithms is employed for the anatomical segmentation. In other words, in the different modes, different respective sets of one or more algorithms are used which have differing computational complexity. Thus, the segmentation model may have different processing channels or streams, each engaging a different set of one or more algorithms which process the image data with a different computational complexity.

In some embodiments, the segmentation model is configurable in at least a first mode and one or more further modes. In the first mode, the segmentation model may be configured with a first computational complexity level and is initialized, during use, using a generic initialization state. In each of the one or more further modes, the segmentation model may be configured with a respective further computational complexity level which is lower than the first computational complexity level and is, during use, initialized using a segmentation result for a previous imaging data frame stored in the datastore. Thus, as briefly suggested above, it is proposed in some embodiments to use segmentation algorithms of different computation complexity depending upon whether or not it is possible to initialize the segmentation with previous segmentation results.

In some embodiments, the one or more further modes include at least two further modes, each with a different respective computational complexity.

In some embodiments, for a first frame of the medical imaging data stream, the computational complexity might be configured at a first level, and for all subsequent frames in the imaging data stream the computational complexity might be configured at one or more different, lower, levels.

One way to implement features suggested above may be to configure the computational complexity level in dependence upon whether the segmentation datastore contains a segmentation result for at least one prior ultrasound data frame of the current imaging session. For example, in some embodiments, the computational complexity is configured at a first level if the segmentation model is initialized using a prior ultrasound data frame of the current imaging session and with a different higher level if the segmentation model is initialized using a generic initialization state.

It has been proposed above that in some embodiments a computational complexity of the segmentation can be adapted depending upon whether the segmentation model can be initialized with prior segmentation results. According to at least one set of embodiments, it is proposed to additionally analyze any prior segmentation result which is available to assess its quality, and to differently configure the segmentation operation in dependence upon the quality analysis. The segmentation model could be configured with greater computational complexity if the segmentation quality of the prior segmentation result (used to initialize the model) is lower and lower computational complexity is the segmentation quality of the prior segmentation result is higher.

One proposed way of doing this is to run an algorithm which generates a quality classification in relation to an input segmentation result. The quality classification may for example be a success/failure classification in relation to the input segmentation result. The quality classification may be binary or may be a numerical score along a scale. The quality classification may refer to a prediction as to an extent to which the input prior segmentation result will yield segmentation results of a quality exceeding a threshold if used to initialize the segmentation model.

For example, in some embodiments, the method may comprise retrieving a quality assessment algorithm configured to receive a segmentation result as an input and to determine a quality classification for the segmentation result as an output. The method may further comprise applying the quality assessment algorithm to said at least one segmentation result for a previous ultrasound data frame to obtain a quality classification. The method may further comprise configuring a computational complexity level of the segmentation model based on the quality classification.

The quality assessment algorithm may be configured to receive only the previous segmentation result as an input. In this case, the classification is based on inherent properties of the segmentation itself. The quality assessment algorithm may be configured to receive as inputs the previous segmentation result in addition to the current imaging frame which is due to be segmented using said prior result as an initialization. The quality assessment algorithm may be configured to receive as inputs the previous segmentation result in addition to the previous imaging frame from which the segmentation was derived.

By way of one example, the quality assessment algorithm may be a machine learning algorithm which is trained in a supervised manner to generate a prediction as to whether the combination of the current 3D image volume (frame) and the associated prior segmentation result will lead to a plausible 2D anatomical plane extraction. An example of one suitable algorithm for performing the quality classification is described in detail in the document: EP4080449 A1.

In some embodiments, the method may comprise a first phase and a second phase. The first phase may comprise: applying the segmentation model in the first mode for each received frame to obtain a segmentation result, and applying the quality assessment algorithm to each segmentation result, and continuing in the first phase until the quality classification of at least one frame matches a pre-defined success criterion. For example, if the quality classification is a score, the success-criterion may be a threshold for that score. The second phase may comprise: applying the segmentation model in the second mode for each received frame.

As mentioned above, in some embodiments, the quality assessment algorithm is a machine learning algorithm.

In some embodiments, each image data frame comprises 3D image data, and wherein the quality classification for a segmentation result of a respective frame is indicative of a predicted success at extracting one or more 2D planes from the respective frame using the segmentation result.

In some embodiments, the one or more algorithms applied by the segmentation model perform steps including fitting a mesh to the medical imaging data, and wherein the initializing the model comprises configuring an initial state of the mesh.

In some embodiments, the previously mentioned anatomical object is the heart or a portion thereof.

In some embodiments, the method further comprises generating a control signal for controlling a user interface to display a visualization of each segmentation result. This assists in guiding a user in conducting the exam in an efficient way.

In some embodiments, the method further comprises controlling the user interface to display a representation of the quality classification of each segmentation result.

By way of one example, a suitable segmentation model for use according to one or more embodiments is described in the document: EP2994053B1. By way of further example, another suitable segmentation model for use according to one or more embodiments is described in the document Ecabert, O. et al.: "Automatic Model-based Segmentation of the Heart in CT Images", IEEE Transactions on Medical Imaging, Vol. 27(9), p. 1189-1291, 2008.

The invention can also be embodied in software form. Another aspect of the invention is accordingly a computer program product comprising computer program code configured, when run on a processor, to cause the processor to perform a method in accordance with any embodiment described in this document or in accordance with any claim of this application.

The invention can also be embodied in hardware form.

One aspect of the invention is a processing device comprise an input/output; and one or more processors configured to: receive at the input/output during an imaging session a medical imaging data stream comprising a series of medical imaging data frames of an anatomical object; retrieve a segmentation model comprising one or more anatomical segmentation algorithms, the segmentation model configured to receive as input a medical imaging data frame and to generate as output a segmentation result; and for each medical imaging data frame of the series, perform a segmentation operation.

The segmentation operation comprises: applying an initialization procedure to initialize the segmentation model, and applying the segmentation model to the current medical imaging data frame to obtain a segmentation result for the current medical imaging data frame, and accessing a segmentation datastore and storing the segmentation result for the current ultrasound data frame in the segmentation datastore. The initialization procedure may comprise: accessing the segmentation datastore; identifying in the datastore stored segmentation results for at least one previous medical imaging data frame of the current imaging session; and initializing the segmentation model using the segmentation result for the at least one previous medical imaging data frame of the current imaging session recorded in the segmentation datastore.

Preferably, the one or more processors are further adapted to generate a data output representative of the segmentation results for the series of images, and preferably adapted to route the data output to the input/output and preferably adapted to export the data output to a further device such as a memory or datastore or server.

Retrieving the segmentation model may comprise communicating via the input/output with a datastore or memory which stores the model.

Another aspect of the invention is a system comprising: a medical imaging apparatus; and processing device as mentioned above, operatively coupled with the medical imaging apparatus for receiving the medical imaging data stream.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 outlines steps of an example method in accordance with one or more embodiments of the invention;
Fig. 2 is a block diagram of an example processing device and system in accordance with one or more embodiments of the invention;
Fig. 3 outlines steps of an example method in accordance with at least one preferred set of embodiments; and
Fig. 4 illustrates components of an example ultrasound imaging apparatus.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Embodiments of the invention provide a medical imaging and segmentation method which utilize segmentation results obtained for 3D frames earlier in a same imaging session to initialize a segmentation model for subsequent 3D frames. This accelerates and stabilizes segmentation results, particularly in the context of a scanning procedure in which segmentation is performed in real time (on-the-fly) for each acquired frame.

Embodiments of the invention may be applied in the context of a method for acquiring a set of target planar views through an anatomy of interest through processing of 3D ultrasound image data. The method may include steps for processing received 3D image frames in real time to extract target planes representing target views of an anatomical object.

It is noted that although explanations and examples are presented below which relate in particular to ultrasound imaging systems, the principles of the invention have more general application to any modality of medical imaging. Other example imaging modalities to which embodiments of this invention might be advantageous applied include, by way of non-limiting example, MRI, optical coherence tomography, and CT imaging. The method may find particularly advantageous application for non-ionizing imaging modalities which permit real-time image acquisition.

To aid understanding, a motivation behind the making of the present invention may be understood at least in part from the following.

During medical imaging examinations, such as ultrasound examinations, a user or operator typically may have need to record images representing a plurality of different anatomical views. These different images may be referred to as anatomical planes. Each plane is time consuming to record. This is especially so for operators with a lesser amount of experience. There is also the potential for error or inaccuracy in plane acquisition, again most particularly for operators of a lower experience level.

To aid in the acquisition of standard anatomical planes, there exist in the art algorithms configured for automatic plane extraction from recorded 3D image volumes. At least one example of such an algorithm is described in the document: EP2994053B1 (also published as WO 2014/162232 A1).

Such algorithms facilitate acquisition by real-time processing of 3D image sequences. In one possible scenario, an operator may scan continuously while the system automatically processes acquired 3D image frames to extract target anatomical planes and display the extracted planes to the user via a user interface. This allows the user to focus on the different anatomical structures while continuing the scan.

In some examples, the image data is ultrasound image data. In some examples, the anatomical structure of interest is the heart. In some examples, at least one 3D frame per cardiac cycle is acquired. This frame may be segmented with anatomical segmentation to identify anatomical features or landmarks and then one or more target anatomical planes are sliced from the 3D frame based on the locations of the anatomical features or landmarks. The segmentation may be model-based segmentation. For example, reference is made to the following document which details one example method of model-based segmentation of the heart: Ecabert, O et al. Automatic Model-Based Segmentation of the Heart in CT Images Medical Imaging, IEEE Transactions on, 2008, 27, pp. 1189-1201. Reference is further made to the following document which details a method for extracting image slices from 3D image frames based on segmentation: EP2994053B1.

As mentioned, once a segmentation is computed for a given frame, anatomical landmarks and anatomical 2D planes can be identified. Other parameters of the imaging may also be configured based on the segmentation, for example, the field of view zoom extent, beam steering, and/or the location of doppler gates (e.g. locating the doppler gate at a center of an artery).

The above-mentioned continuous scanning scenario enables continuous update of extracted 2D planes and identified anatomical landmarks. The segmentation can be performed for each frame or at regular frame intervals. The extracted anatomical planes may be displayed to a user on-the-fly, which may enable a shorter exam time duration, more stable acquisition of the 2D slices, and improved reliability of acquired data for purposes of deriving anatomical measurements. This may improve workflow and diagnostic confidence.

In accordance with embodiments of the present invention, it is proposed to perform time-series segmentation, otherwise known as sequence segmentation, by which is meant the segmentation of image frames sequentially, in real time, as the frames are being acquired.

In a continuous scanning scenario such as this, anatomical plane positions may change over time, both due to transducer movements and patient breathing. A significant challenge in sequence segmentation is to capture such relevant plane changes in a way that does not result in unstable segmentation, leading to unstable plane extraction, e.g. originating from unclear apex positions. Unstable segmentation refers for example to a scenario in which segmentation results for a substantially same physical anatomical state differ between frames. For example, model based segmentation comprises fitting a surface mesh to the imaged anatomy. This involves some degree of estimation and interpolation often based on imperfect image data. Although this typically results in a sensible segmentation per frame, there may be small jumps in the segmentation between consecutive frames and hence in the resulting extracted planes. This results in non-smooth (unstable) segmentation in a continuous acquisition scenario.

Frame-by-frame model-based segmentation (MBS) approaches which are known in the art have the disadvantage of high latency, which runs contrary to the aim of providing a smooth user experience and enabling real-time user guidance for continued execution of the scan.

To overcome one or more of the above-mentioned problems, it is proposed in accordance with one or more embodiments of the invention to dynamically utilize previous segmentation results from a same imaging session in order to accelerate and stabilize segmentation. In particular, it is proposed to use segmentation results obtained for previous image frames during a scan to initialize a segmentation algorithm for a subsequent (current) image frame. This achieves the twin effects of improved frame-to-frame segmentation stability as well as increased segmentation speed.

In some embodiments, the proposed method is applied for ultrasound image data acquired in the context of an ultrasound imaging procedure.

For example, at least one advantageous set of embodiments provide a method which may include one or more of the following steps. One step may include obtaining a current 3D image frame of a volumetric region from an imaging system (e.g. an ultrasound acquisition system) during a scan of a patient. Another step may comprise checking if segmentation results for a previous 3D image frame acquired by the imaging system during the same scan of the patient are available and, if so, initializing a segmentation model based on the segmentation results for the previous image frame. For example, this might comprise setting a starting state of a mesh, wherein the segmentation model is configured to fit said mesh to data of the acquired image frame. Another step may comprise segmenting the current 3D image frame with the segmentation model based on the initialized segmentation model.

In one particular set of embodiments, the proposed method may further comprise one or more of the following steps, performed prior to the segmenting step. One step may include determining, using a quality assessment algorithm (which may for example utilize a trained AI algorithm), a quality status (e.g. a success/failure status) of the segmentation results for the aforementioned previous 3D image frame. Another step may include setting a computational-complexity or accuracy-level of the segmentation model for segmenting the current 3D image frame based on the determined quality status for the previous segmentation results.

Thus, here, the segmentation workflow is complemented by a quality assessment procedure, which may be referred to in descriptions that follow as a failure-detection module. Such a module may advantageously address two potential issues. First, it may assist in avoiding error propagation by avoiding the use of poor quality prior segmentation results to initialize a new segmentation. The failure check allows for tracking to be deactivated dynamically to prevent errors propagating temporally throughout the examination. In this case, a next segmentation may be performed 'from scratch', for example using a generic initialization sate for the segmentation model.

Furthermore, results of the failure detection module may be communicated to the user via control of the user interface. In this way, the user can be provided a warning where a segmentation is found to be of poor quality. This may indicate for example that none of the target planes are able to be extracted from the respective 3D image. This failure could be due to an error in the segmentation itself (e.g. the mesh has snapped at an incorrect position) or due to poor image acquisition (e.g. due to motion artefacts from patient breathing, or an incorrectly aligned field of view; or poorly configured contrast settings). This information allows a user to dynamically adjust the scanning implementation to try to avoid the same problems continuing for future frames.

In one particular set of embodiments, the method may further comprise one or more of the following steps. One step may include, in the event that no segmentation results are available for any previous 3D image frame from the current imaging session, initializing the segmentation model with a (non-patient specific) mean model (generic model) and selecting a high computational-complexity/accuracy-level for the segmentation model to segment the current 3D image frame.

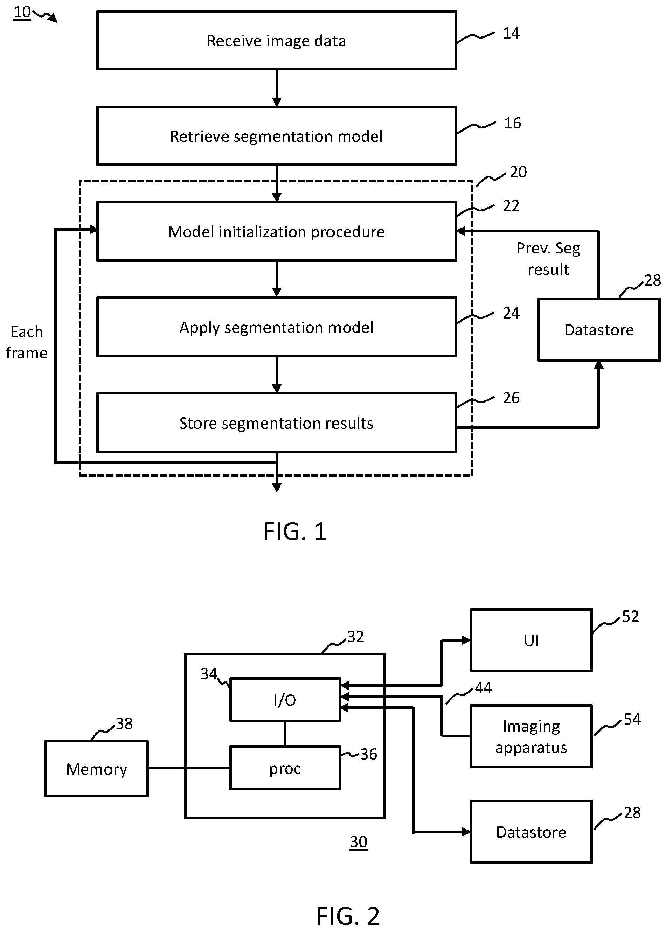

Fig. 1 outlines in block diagram form steps of an example method according to one or more embodiments. The steps will be recited in summary, before being explained further in the form of example embodiments.

The method 10 is a computer-implemented method. The method comprises receiving 14 during an imaging session a medical imaging data stream comprising a series of medical imaging data frames of an anatomical object. The imaging data frames may be 3D image frames. For example, ultrasound imaging data frames may be received in some embodiments.

The method further comprises retrieving 16 a segmentation model comprising one or more anatomical segmentation algorithms, the segmentation model configured to receive as input a medical imaging data frame and to generate as output a segmentation result.

The method further comprises, for each medical imaging data frame of the series, performing a segmentation operation 20 which comprises at least the following steps. The segmentation operation 20 comprises applying an initialization procedure 22 to initialize the segmentation model. The segmentation operation further comprises applying 24 the segmentation model to the current medical imaging data frame to obtain a segmentation result for the current medical imaging data frame. For example, this may involve fitting a mesh to an anatomy depicted in the medical imaging data frame. In some embodiments, the initialization comprises configuring an initial state of the mesh, for example configuring an initial morphology, shape or position of the mesh. The segmentation operation may further comprise accessing a segmentation datastore 28 and storing 26 the segmentation result for the current ultrasound data frame in the segmentation datastore. The segmentation datastore may be provided by a local memory or may be a remote datastore accessible via a network link for example.

It is proposed that the aforementioned initialization procedure 22 comprises at least the following steps: accessing the segmentation datastore 28; identifying in the datastore stored segmentation results for at least one previous medical imaging data frame of the current imaging session; and initializing the segmentation model using the segmentation result for the at least one previous medical imaging data frame of the current imaging session recorded in the segmentation datastore.

Preferably, the initialization procedure comprises a process of checking whether the segmentation datastore contains a segmentation result for at least one prior ultrasound data frame of the current imaging session. If so, the method comprises initializing the segmentation model using the segmentation result for the at least one previous medical imaging data frame of the current imaging session recorded in the segmentation datastore. If not, the method comprises initializing the segmentation model using a generic initialization state.

As noted above, the method can also be embodied in hardware form, for example in the form of a processing device which is configured to carry out a method in accordance with any example or embodiment described in this document, or in accordance with any claim of this application.

To further aid understanding, Fig. 2 presents a schematic representation of an example processing device 32 configured to execute a method in accordance with one or more embodiments of the invention. The processing device is shown in the context of a system 30 which comprises the processing device. The processing device alone represents an aspect of the invention. The system 30 is another aspect of the invention. The provided system need not comprise all the illustrated hardware components; it may comprise only a subset.

The processing device 32 comprises one or more processors 36 configured to perform a method in accordance with that outlined above, or in accordance with any embodiment described in this document or any claim of this application. In the illustrated example, the processing device further comprises an input/output 34 or communication interface.

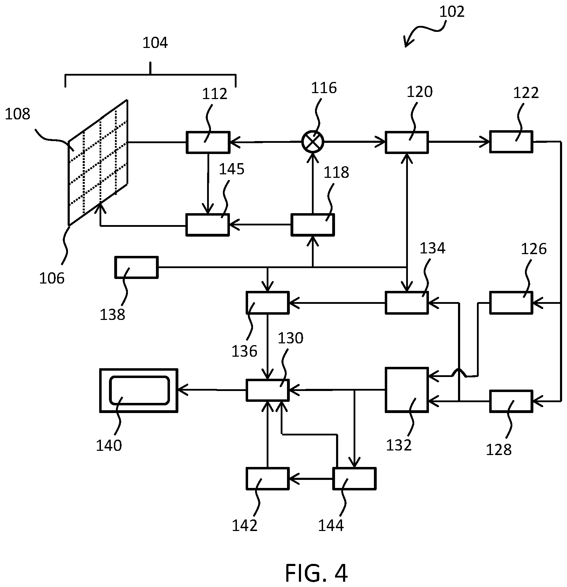

In the illustrated example of Fig. 2, the system 30 further comprises a user interface 52. Features of the user interface will be described with greater detail later. In the illustrated example of Fig. 2, the system 30 further comprises an ultrasound acquisition or imaging apparatus 54 for acquiring 3D ultrasound imaging data 44. An example implementation of an ultrasound imaging apparatus will be described later with reference to Fig. 4. The aforementioned datastore 28 for storing the segmentation results for each processed imaging frame is also schematically indicated in Fig. 2.

The system 30 may further comprise a memory 38 for storing computer program code (i.e. computer-executable code) which is configured for causing the one or more processors 36 of the processing unit 32 to perform the method as outlined above, or in accordance with any embodiment described in this disclosure, or in accordance with any claim.

As mentioned previously, the invention can also be embodied in software form. Thus another aspect of the invention is a computer program product comprising computer program code configured, when run on a processor, to cause the processor to perform a method in accordance with any example or embodiment of the invention described in this document, or in accordance with any claim of this patent application.

It is also noted that there is intended to be complete compatibility in features between the different aspects of the invention (system, method, computer program product), so that features or options recited in the context of one aspect can be applied equally to any other aspect.

The one or more algorithms applied by the segmentation model may perform steps including fitting a mesh to the medical imaging data. The initializing the model may comprise configuring an initial state of the mesh.

In preferred embodiments, the segmentation model may be applicable with an adjustable computational complexity. In other words, the segmentation operation further comprises configuring a computational complexity level of the segmentation model in advance of applying the segmentation model.

The term `computational complexity', when applied to an algorithm, is a term of art and means the amount of computing resources needed to run the algorithm. Computational complexity is usually measured in terms of a number of elementary operations that are executed during execution of the algorithm.

Thus, computational complexity roughly approximates with the level of intensity with which the inputs are processed to obtain the outputs. Thus, for a same reliability or accuracy of output, it is of course of general benefit for the computational complexity of the algorithm to be minimized. In general, the more reliable, accurate or high resolution are the inputs or the initialization, then then lower the required computational complexity of the algorithm in order to obtain outputs of a given accuracy or reliability. The lower the computational complexity, the faster the algorithm and the lower the processing expense. Thus, it has been recognized by the inventors that it would be of benefit to enable the computational complexity of the applied segmentation algorithm to be adjusted in dependence upon an assumed accuracy or reliability of the inputs or of the model initialization.

In preferred embodiments, the method includes a process for checking a reliability or quality of a previous segmentation result which is to be used for initializing the segmentation model for a current segmentation operation.

In preferred embodiments, the computational complexity at which the segmentation model is run may be adjusted in dependence upon the determined reliability or quality of the previous segmentation result which is to be used for initializing the segmentation model for a current segmentation operation. If the reliability or quality is found to be lower, a higher computational complexity can be used. If the reliability or quality is found to be higher, a lower computational complexity can be used. This aims at providing an optimum balance between segmentation accuracy for a current frame and processing expense for running the segmentation.

Thus, to state this more explicitly, in some embodiments, the segmentation operation may further comprise: retrieving a quality assessment algorithm configured to receive a segmentation result as an input and to determine a quality classification for the segmentation result as an output; applying the quality assessment algorithm to said at least one segmentation result for a previous ultrasound data frame to obtain a quality classification, and configuring a computational complexity level of the segmentation model based on the quality classification. The steps could be applied in a different order. For example, the quality assessment algorithm may be applied to the segmentation result before it is stored in the segmentation datastore, and wherein the method comprises retrieving the segmentation result along with its quality classification from the datastore and configuring a computational complexity level of the segmentation model based on the quality classification.

With regards to the quality assessment algorithm, one possible implementation may be as follows.

In some embodiments, the quality assessment algorithm may be configured such as to generate a quality classification for a segmentation result of a respective frame that is indicative of a predicted success at extracting one or more 2D planes from the respective frame using the segmentation result.

In some embodiments, the quality assessment algorithm may be a machine learning algorithm, for example an artificial neural network.

As mentioned above, in preferred embodiments, the system 30 includes a user interface with a controllable display. The display may be controlled to present to the user results of the segmentation operation for one or more of the imaging data frames. In some embodiments, the display may be controlled to display one or more of the 2D planes extracted from one or more of the received 3D image data frames. Thus, the user interface may provide real-time feedback to the user as they are engaged in the ongoing procedure of conducting the scan. Thus, the user can modify the conduct of the scan in a continuous machine-human interaction process, based on information provided on the display. For example, the user can look at extracted planes and use these to adjust positioning of an ultrasound probe. By way of further example, the user can review results of the quality assessment algorithm applied to segmentations of image frames and can see if segmentation results are currently poor. Responsive to this, the user could adjust the positioning or motion of an ultrasound probe, or adjust acquisition settings (e.g. contrast, or field-of-view settings). In some embodiments, the user interface may be controlled to permit user input of user control commands for configuring various aspects of the segmentation operation discussed above. For example, the user may be provided an option to re-trigger a 'from scratch' segmentation in which a generic initialization is used instead of initialization based on prior segmentation results.

In some embodiments, the received imaging data frames are 3D image data frames. In some embodiments, the method may further comprise using the segmentation of at least one of the received 3D image data frames to extract one or more 2D planes through the 3D volume covered by the 3D image frame. In particular, in some embodiments, based on the anatomical context provided by the segmentation, the method may further comprise determining the location of a defined set of 2D views within the 3D volume. For example, locations of standard view planes might be encoded in terms of a set of segmentable anatomical elements that are situated within the view plane. The segmentation results provide the set of segmentable elements labelled as to their location in the 3D frame volume. Linear regression may then be performed through the segmented elements to determine the closest fit planes through the 3D frame volume which match the standard view planes. Reference is made to the document EP2994053B1 which describes a method for segmentation of a 3D image and extraction of one or more 2D planes therefrom using the segmentation results.

In further embodiments, based on the segmentation result for a given 3D frame, an anatomical co-coordinate system may be fitted to the 3D frame, wherein a set of anatomical elements with known relative positioning to one another are identified in the frame, wherein a co-ordinate system is fit to the frame based on the locations of the anatomical elements in the frame. Locations of a set of target planes may then be identified based on known co-ordinate extents of the planes and based on the fitted co-ordinate system.

The set of available planes will depend upon the imaging modality and the area being scanned, (e.g., TTE probe versus TEE probe, or left ventricle versus right ventricle focus).

Once the target planes have been identified, in some embodiments, the method may further comprise extraction of the planes from a 3D frame by slicing through the 3D frame. In this regard, reference is again made to the document: EP2994053B1.

With reference again to the optional user interface 52, this may be controlled to provide a display output which includes one or more the extracted 2D planes.

In some embodiments, the user interface 52 may be controlled to provide a visual representation of the extracted 2D anatomical planes for each 3D image frame.

In some embodiments, the user interface 52 may be controlled to provide a visual representation of orthogonal slices of the original 3D cartesian image volume (e.g. in a first display window presented on the user interface display) in addition to the anatomical 2D planes extracted from the 3D volume (e.g. in a second display window presented on the user interface display).

In some embodiments, the user interface 52 may be controlled to provide a visual representation of anatomical 2D planes extracted from a plurality of different 3D image frames. For example, in some embodiments, there may be shown in one provided display window a set of 2D planes extracted from a single previous 3D frame. These remain static. There may additionally be provided a second display window which displays extracted 2D planes from a current 3D frame. In some embodiments, the second display window showing the 2D planes extracted from a current frame might only be presented in the event that the mesh distances of the previous frame segmentation result and a current frame segmentation result exceed a pre-defined threshold. In some embodiments, the user interface may have configurable display settings permitting a user to, for example, optionally set the second display window (showing the 2D planes extracted from a current 3D frame) as the main default view. There may be a control option permitting these planes to be temporarily locked in a static view, to prevent further update, allowing the user the opportunity to inspect the anatomical planes without any plane motion at all.

In some embodiments the first and second display windows discussed above might be presented simultaneously in a side-by-side format. Alternatively, they might be presented in switchable format, permitting a user to switch between the views as main and secondary views.

In some embodiments, for each frame, the user interface may be controlled to provide the quality classification generated by the quality assessment algorithm for each segmentation result. These might be presented for example in the form of graphical indicia, for example in the form of color-coded graphical indicia. In some embodiments, the quality classification may be a binary pass/fail or success/failure classification. In some embodiments, the quality classification may be a graded score.

In some embodiments, the user interface may be configured to permit manual adaptation by the user of one or more settings or parameters of the executed method. For example, the user interface may permit a user to adjust parameters of the quality assessment algorithm, e.g. adjust a threshold for the success criterion against which the quality classification of the quality assessment algorithm is compared. In some embodiments, the user interface may be controlled to provide the user with a control element permitting the user to manually trigger re-segmentation of a given 3D frame. In some examples, the quality assessment algorithm is a machine learning model. In some embodiments, the manual user re-triggering of the segmentation algorithm may be used as information for training the model. Such manual adaptations aid in continuous learning of the quality assessment algorithm.

An example implementation of the method according to a particular set of embodiments will now be described by way of illustration of the above-summarized concept of the invention. It will be appreciated that not all features of this particular set of embodiments are essential to the inventive concept, and are described to aid understanding and to provide an example to illustrate the inventive concepts.

In accordance with this particular set of embodiments, the segmentation model comprises three different segmentation algorithms which may be selectively applied according to circumstance.

In particular, the segmentation model is selectively operable in different modes, wherein, in each mode, the model performs segmentation with a different level of computational complexity. In each mode, a different respective set of one or more segmentation algorithms is employed for the anatomical segmentation.

In particular, according to the present set of embodiments, the segmentation model includes the following three different types of segmentation algorithm, which will be referred to as Alg. 1, Alg. 2 and Alg. 3. The segmentation model can be run in each of at least two different modes. In a first mode, the segmentation algorithm Alg. 1 is applied. In a second mode, the segmentation algorithm Alg. 2 or Alg. 3 is applied. The segmentation algorithms differ in their computational complexity.

With regards to Alg. 1, this segmentation algorithm is configured to be initialized with a generic initialization state, and has a first level of computational complexity. This can be applied for example to an initial, first, 3D frame, since it does not require initialization with prior segmentation results. Of the three segmentation algorithms, this has the highest computation complexity, and is accordingly provides the most robust segmentation. Accordingly, it is also the slowest algorithm.

With regards to Alg. 2, this algorithm is designed to be initialized with a previous segmentation result, this previous segmentation result defining an initial shape for a mesh to be fitted to the 3D image frame. However, Alg. 2 also includes shape finder functionality for determining an approximate shape for the mesh, which enables any substantive errors in the initialized mesh shape to be corrected. Alg. 2 also has an increased number of adaptation iterations compared with Alg. 3, making it more robust. However, the use of the previous segmentation result for initialization permits the algorithm to have fewer adaptation iterations that Alg. 1, since typically less adjustment is needed of the mesh compared with initialization using a generic mesh shape.

With regards to Alg. 3, this segmentation algorithm has the lowest computational complexity of the three algorithms. This algorithm is also designed to be initialized with a previous segmentation result. For example, initialization comprises setting an initial state for the mesh prior to fitting the mesh to the image data of the 3D image data frame. This algorithm is thus the fastest of the three algorithms. This algorithm might be referred to as a fast "follow-up" segmentation algorithm. This algorithm has fewer adaptation iterations than Alg. 2. Furthermore, this algorithm does not include shape finder functionality, and thus assumes that the initialized mesh shape is substantively accurate, with only more minor modifications needed.

In operation, the computational complexity level of the segmentation model can be configured by switching the model between different computational complexity modes.

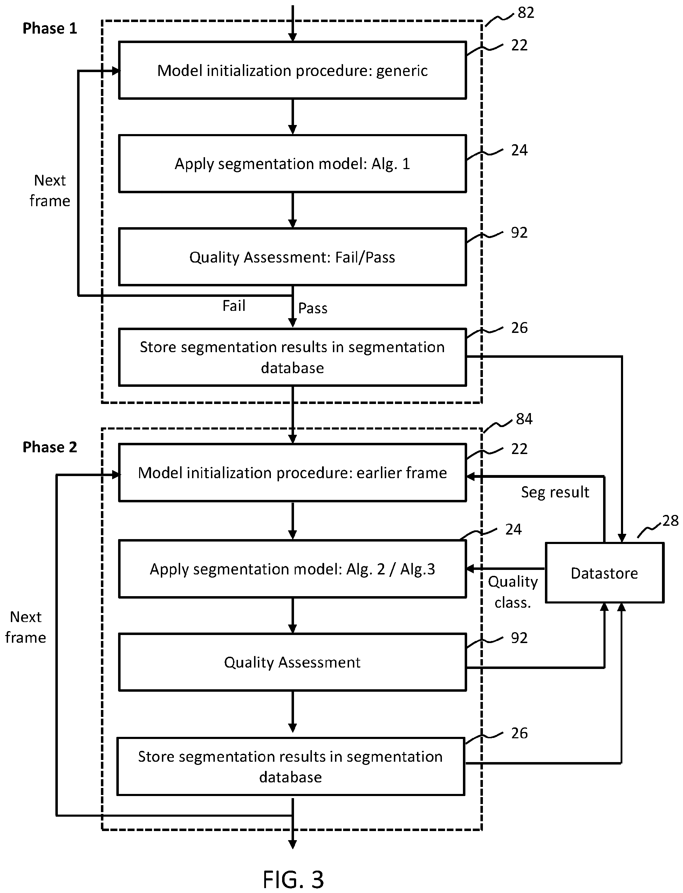

Fig. 3 outlines steps of an example workflow according to one set of embodiments.

The method can be understood as comprising a first phase 82 and a second phase 84. The first phase comprises configuring the segmentation model in the first mode, in which the segmentation model utilizes the first segmentation algorithm, Alg. 1. In this mode, the segmentation model operates with the highest computational complexity. The method comprises applying 22 the initialization procedure to initialize the thus configured segmentation model. In this instance of the initialization procedure, the segmentation model is initialized with a generic initialization state. The segmentation model is applied 24 in the first mode to a first received frame to obtain a segmentation result. The quality assessment algorithm (already discussed above) is then applied 92 to the segmentation result to derive a quality classification for the segmentation result. This may be indicative of a predicted success/failure of the segmentation if used to guide 2D plane extraction in a later operation. If the quality classification passes a pre-defined criterion or standard for success, then the method may proceed to the second phase 84, after storing 26 the segmentation result for the first frame in a segmentation datastore 28. If the quality classification does not meet the pre-defined success criterion, then the method remains in the first phase, with the segmentation model configured in the first (high complexity) mode, and the steps of the first phase are repeated for new 3D frames until the success criterion is met.

In the second phase 84, the segmentation model may be applied in the second mode, using second segmentation algorithm, Alg. 2, or the third segmentation algorithm, Alg. 3.

The segmentation algorithms Alg. 2 and Alg. 3 are each configured to be initialized with a segmentation result from at least one previous medical imaging data frame of a current imaging session. Alg. 2 has a computation complexity lower than Alg. 1. Alg. 3 has a computational complexity lower than Alg. 1 and Alg. 2. Thus, in phase 2, the segmentation model, using either Alg. 2 or Alg. 3, is initialized 22 with a segmentation result for at least one previous medical imaging data frame stored in the segmentation datastore 28. The segmentation model, thus initialized, is then applied 24 to the current medical imaging data frame. The quality assessment algorithm is then applied 92 to the segmentation result derived for the current frame. In some embodiments, the resulting quality classification for the segmentation result is recorded in the segmentation datastore 28, in combination with the segmentation result 26 itself. In some embodiments, the segmentation result for a current frame is only recorded in the segmentation datastore if the segmentation result meets a pre-defined success criterion.

In preferred embodiments, the method, in the second phase 84, comprises checking the quality classification of the previous segmentation result in the datastore which is to be used for initializing the model and selecting the computational complexity of the model (by selecting between Alg. 2 and Alg. 3) based on the quality classification. In particular, it is proposed that the datastore record the quality classification for each recorded segmentation result. A higher computational complexity segmentation algorithm (e.g. Alg. 2) may be applied in the event that the quality classification fails to meet a criterion, and a lower computation complexity segmentation algorithm (e.g. Alg. 3) may be applied in the event that the quality classification meets the criterion.

The method steps of phase two 84 may be repeated for each of a series of frames until the imaging procedure is complete.

Thus, the basic operation flow of the method according to Fig. 3 might be summarized in the following way. In a first phase 82, an initial segmentation of a first frame is performed using Alg. 1 (i.e. with the segmentation model in the first mode). This is designed to be initialized with a generic initialization state, e.g. a generic mesh for the anatomical object. Optionally this step is repeated for one or more subsequent frames until the quality assessment algorithm indicates a quality classification which passes a success criterion for the first time. Subsequently (phase two 84), segmentation algorithms Alg. 2 and/or Alg. 3 are used. These are designed to be initialized using the segmentation result from at least one previous frame, for example the segmentation result for the first frame computed using Alg. 1 (with highest computational complexity). Thus, for initialization of Alg. 2 or Alg. 3, the generic or mean mesh is replaced by the prior successful segmentation result. Thus, the patient-individual shape for the anatomical object can be exploited by Alg. 2 and Alg. 3. Each subsequent view is either segmented using Alg. 2 or Alg. 3, depending on the previous quality classification.

In particular, if the previous segmentation result is classified as meeting a success criterion, the fast follow-up segmentation model Alg. 3 is applied. In contrast to the other models, Alg. 3 has no shape finder and a reduced number of adaptation iterations, i.e., this model is tuned to adapt the mesh towards subtle frame-to-frame changes only. If the previous segmentation is classified as not meeting the success criterion, the intermediate "from-scratch" segmentation model Alg. 2 can be applied. Alg. 2 does include shape finder functionality and has an increased number of adaptation iterations, while still using, as a starting point, the patient-individual mesh shape that has been obtained in the prior segmentation result. Thus, both Alg. 2 and Alg. 3 use the mesh shape found in the previous segmentation result (preferably that found in phase 1 using Alg. 1) but differ in their respective computation complexity. Alg. 2 has a shape finder, and so can more substantively re-compute the mesh shape/morphology compared to the initialized shape, and also has additional adaptation iterations compared to Alg. 3. Alg. 3 does not have a shape finder and so can only make more minor alterations to the mesh shape compared to Alg. 2.

The complexity and runtime requirements of a model based segmentation depend in general on the number of adaptation iterations.

It will be recognized that there is a trade-off between model complexity and segmentation accuracy. The segmentation algorithms Alg. 1, Alg. 2 and Alg. 3 are tuned in such a way that real time processing is enabled with decreasing computational complexity from Alg. 1 to Alg. 3. The slow and robust "initial" segmentation model Alg. 1 is the most complex model as no knowledge transfer from previous image frames is provided during segmentation, i.e. there is no initialization using segmentation results from previous frames. However, this algorithm may, in preferred embodiments, be applied only once to set an initial starting point for follow-up segmentations. In some embodiments, it may be repeated for one or more further frames until the quality assessment algorithm indicates a quality classification which meets a success criterion for the first time.

With regards to the quality assessment algorithm, this may in some embodiments be adapted to generate a binary (Boolean) classification, e.g. pass/fail or success/failure. In some embodiments, the quality assessment algorithm is configured to generate a numerical score as an output classification. To assess whether the classification meets a success criterion, this score may be compared against a threshold for example. The input to the quality assessment algorithm may be the segmentation result alone in some embodiments. In further embodiments, the input to the quality assessment algorithm is the segmentation result in combination with the current 3D image frame. In further embodiments, the quality assessment algorithm may be configured to receive as inputs the previous segmentation result in addition to the previous imaging frame from which the segmentation was derived.

The quality assessment algorithm may in some embodiments be a trained machine learning algorithm, such as an artificial neural network, such as a convolutional neural network.

The quality assessment algorithm may be trained in a supervised manner to generate output predictions or classifications of the quality of a segmentation, termed in this document as a quality classification. The training of the algorithm can be performed using training data comprising segmentation results annotated with manually assessed quality classifications (e.g. a binary pass/fail classification or a success/failure score). In some embodiments, the input training data entries may each comprise both a segmentation result and an ultrasound image frame and wherein this is annotated with a manually assessed classification as to the extent to which the segmentation correctly represents the relevant anatomy depicted in the image frame. Thus, the quality assessment algorithm may be trained to generate decisions indicative of whether an input combination of a previous 3D ultrasound image frame and an associated previous segmentation result (mesh) derived for the image frame will lead to sensible 2D anatomical plane extraction. Such a module can be trained on manually annotated data (e.g., on a mixture of real and artificially broken segmentations). Alternatively, existing 2D view classifiers could be used to automatically decide a quality of extracted planes, for example as described in the document: EP4080449 A1.

In some embodiments, the quality assessment algorithm may include an initial phase comprising extracting one or more regional features of the segmentation result and wherein the one or more regional features form the inputs to the machine learning algorithm. For example, the one or more regional features may be features which characterize, for a given region of the segmentation mesh, a degree of support for the mesh region in the underlying image from which it was generated, and/or a degree of interpolation used in forming the mesh region. The machine learning algorithm may be trained in a supervised manner to map these regional features to a quality classification.

As already discussed, the method may comprise comparing the output quality classification generated by the quality assessment algorithm against a pre-defined success criterion. In some embodiments, the success criterion may be a threshold for the quality classification. In some embodiments, the success criterion may be determined in part based on a user input. In other words the success criterion may be user-configurable. This effectively allows a user to tune the level of reliability of the segmentation for the current frame, and thus a level of stability of frame-to-frame segmentation.

In some embodiments, the initialization procedure may comprise initializing the segmentation model using segmentation results from a plurality of prior imaging frames. For example, in some embodiments, an anatomy motion trajectory may be estimated based on segmentation results for a time-series of image frames preceding a current image frame, and generating an estimated mesh shape and position for a current frame and initializing the current frame using the estimated mesh shape and position for the current frame.

In some embodiments, the method includes storing each acquired segmentation result for each frame along with a quality classification for the segmentation result. In some embodiments, the method may comprise an acquisition guidance function wherein guidance information is presented to a user via the user interface for guiding a user to re-acquire at least one previous image frame for which a stored segmentation result has an associated quality classification which fails to meet a pre-defined criterion. For example the guidance information may be information for guiding a user in moving the probe to a position suitable for acquiring the relevant image frame.

Embodiments of the invention may find particularly advantageous application for ultrasound imaging, for example of the human heart. However, the inventive principles are not at all restricted to this field. Embodiments of the invention are generally applicable to any non-ionizing imaging modality that allows real-time acquisition of image, for example using a constant geometrical set-up, e.g., optical coherence tomography (OCT). Furthermore, the target anatomical object of interest can be any part of the human body and is not restricted to the heart. Other examples include for instance fetal scanning, pathology, or veterinary applications.

Embodiments of the invention may be employed in some examples in the context of an image-guided acquisition system or a 3D-based stress echo examination system.

The application of the segmentation establishes anatomical context from the 3D volume. For example, the segmentation may employ use of model-based segmentation. At least one suitable example method of model-based segmentation is described in the paper: Ecabert, O et al. Automatic Model-Based Segmentation of the Heart in CT Images Medical Imaging, IEEE Transactions on, 2008, 27, pp. 1189-1201.

By way of further example, the segmentation may employ use of a machine-learning based segmentation algorithm, for example a convolutional neural network trained for performing segmentation. At least one suitable machine learning model for performing segmentation is described in: LI, Yuanwei, et al. Standard plane detection in 3D fetal ultrasound using an iterative transformation network. In: International Conference on Medical Image Computing and Computer-Assisted Intervention. Springer, Cham, 2018. S. 392-400.

As noted above, certain embodiments may include an ultrasound acquisition apparatus 54, and/or means for processing ultrasound echo data to derive further data.

By way of further, more detailed explanation, the general operation of an exemplary ultrasound acquisition apparatus will now be described, with reference to Fig. 4.

The system comprises an array transducer probe 104 which has a transducer array 106 for transmitting ultrasound waves and receiving echo information. The transducer array 106 may comprise CMUT transducers; piezoelectric transducers, formed of materials such as PZT or PVDF; or any other suitable transducer technology. In this example, the transducer array 106 is a two-dimensional array of transducers 108 capable of scanning either a 2D plane or a three dimensional volume of a region of interest. In another example, the transducer array may be a 1D array.

The transducer array 106 is coupled to a microbeamformer 112 which controls reception of signals by the transducer elements. Microbeamformers are capable of at least partial beamforming of the signals received by sub-arrays, generally referred to as "groups" or "patches", of transducers as described in US Patents 5,997,479 (Savord et al.), 6,013,032 (Savord), and 6,623,432 (Powers et al.).

It should be noted that the microbeamformer is in general entirely optional. Further, the system includes a transmit/receive (T/R) switch 116, which the microbeamformer 112 can be coupled to and which switches the array between transmission and reception modes, and protects the main beamformer 120 from high energy transmit signals in the case where a microbeamformer is not used and the transducer array is operated directly by the main system beamformer. The transmission of ultrasound beams from the transducer array 106 is directed by a transducer controller 118 coupled to the microbeamformer by the T/R switch 116 and a main transmission beamformer (not shown), which can receive input from the user's operation of the user interface or control panel 138. The controller 118 can include transmission circuitry arranged to drive the transducer elements of the array 106 (either directly or via a microbeamformer) during the transmission mode.

The function of the control panel 138 in this example system may be facilitated by an ultrasound controller unit according to an embodiment of the invention.

In a typical line-by-line imaging sequence, the beamforming system within the probe may operate as follows. During transmission, the beamformer (which may be the microbeamformer or the main system beamformer depending upon the implementation) activates the transducer array, or a sub-aperture of the transducer array. The sub-aperture may be a one dimensional line of transducers or a two dimensional patch of transducers within the larger array. In transmit mode, the focusing and steering of the ultrasound beam generated by the array, or a sub-aperture of the array, are controlled as described below.

Upon receiving the backscattered echo signals from the subject, the received signals undergo receive beamforming (as described below), in order to align the received signals, and, in the case where a sub-aperture is being used, the sub-aperture is then shifted, for example by one transducer element. The shifted sub-aperture is then activated and the process repeated until all of the transducer elements of the transducer array have been activated.

For each line (or sub-aperture), the total received signal, used to form an associated line of the final ultrasound image, will be a sum of the voltage signals measured by the transducer elements of the given sub-aperture during the receive period. The resulting line signals, following the beamforming process below, are typically referred to as radio frequency (RF) data. Each line signal (RF data set) generated by the various sub-apertures then undergoes additional processing to generate the lines of the final ultrasound image. The change in amplitude of the line signal with time will contribute to the change in brightness of the ultrasound image with depth, wherein a high amplitude peak will correspond to a bright pixel (or collection of pixels) in the final image. A peak appearing near the beginning of the line signal will represent an echo from a shallow structure, whereas peaks appearing progressively later in the line signal will represent echoes from structures at increasing depths within the subject.

One of the functions controlled by the transducer controller 118 is the direction in which beams are steered and focused. Beams may be steered straight ahead from (orthogonal to) the transducer array, or at different angles for a wider field of view. The steering and focusing of the transmit beam may be controlled as a function of transducer element actuation time.

Two methods can be distinguished in general ultrasound data acquisition: plane wave imaging and "beam steered" imaging. The two methods are distinguished by a presence of the beamforming in the transmission ("beam steered" imaging) and/or reception modes (plane wave imaging and "beam steered" imaging).

Looking first to the focusing function, by activating all of the transducer elements at the same time, the transducer array generates a plane wave that diverges as it travels through the subject. In this case, the beam of ultrasonic waves remains unfocused. By introducing a position dependent time delay to the activation of the transducers, it is possible to cause the wave front of the beam to converge at a desired point, referred to as the focal zone. The focal zone is defined as the point at which the lateral beam width is less than half the transmit beam width. In this way, the lateral resolution of the final ultrasound image is improved.

For example, if the time delay causes the transducer elements to activate in a series, beginning with the outermost elements and finishing at the central element(s) of the transducer array, a focal zone would be formed at a given distance away from the probe, in line with the central element(s). The distance of the focal zone from the probe will vary depending on the time delay between each subsequent round of transducer element activations. After the beam passes the focal zone, it will begin to diverge, forming the far field imaging region. It should be noted that for focal zones located close to the transducer array, the ultrasound beam will diverge quickly in the far field leading to beam width artifacts in the final image. Typically, the near field, located between the transducer array and the focal zone, shows little detail due to the large overlap in ultrasound beams. Thus, varying the location of the focal zone can lead to significant changes in the quality of the final image.

It should be noted that, in transmit mode, only one focus may be defined unless the ultrasound image is divided into multiple focal zones (each of which may have a different transmit focus).

In addition, upon receiving the echo signals from within the subject, it is possible to perform the inverse of the above described process in order to perform receive focusing. In other words, the incoming signals may be received by the transducer elements and subject to an electronic time delay before being passed into the system for signal processing. The simplest example of this is referred to as delay-and-sum beamforming. It is possible to dynamically adjust the receive focusing of the transducer array as a function of time.

Looking now to the function of beam steering, through the correct application of time delays to the transducer elements it is possible to impart a desired angle on the ultrasound beam as it leaves the transducer array. For example, by activating a transducer on a first side of the transducer array followed by the remaining transducers in a sequence ending at the opposite side of the array, the wave front of the beam will be angled toward the second side. The size of the steering angle relative to the normal of the transducer array is dependent on the size of the time delay between subsequent transducer element activations.

Further, it is possible to focus a steered beam, wherein the total time delay applied to each transducer element is a sum of both the focusing and steering time delays. In this case, the transducer array is referred to as a phased array.

In case of the CMUT transducers, which require a DC bias voltage for their activation, the transducer controller 118 can be coupled to control a DC bias control 145 for the transducer array. The DC bias control 145 sets DC bias voltage(s) that are applied to the CMUT transducer elements.

For each transducer element of the transducer array, analog ultrasound signals, typically referred to as channel data, enter the system by way of the reception channel. In the reception channel, partially beamformed signals are produced from the channel data by the microbeamformer 112 and are then passed to a main receive beamformer 120 where the partially beamformed signals from individual patches of transducers are combined into a fully beamformed signal, referred to as radio frequency (RF) data. The beamforming performed at each stage may be carried out as described above, or may include additional functions. For example, the main beamformer 120 may have 128 channels, each of which receives a partially beamformed signal from a patch of dozens or hundreds of transducer elements. In this way, the signals received by thousands of transducers of a transducer array can contribute efficiently to a single beamformed signal.

The beamformed reception signals are coupled to a signal processor 122. The signal processor 122 can process the received echo signals in various ways, such as: band-pass filtering; decimation; I and Q component separation; and harmonic signal separation, which acts to separate linear and nonlinear signals so as to enable the identification of nonlinear (higher harmonics of the fundamental frequency) echo signals returned from tissue and micro-bubbles. The signal processor may also perform additional signal enhancement such as speckle reduction, signal compounding, and noise elimination. The band-pass filter in the signal processor can be a tracking filter, with its pass band sliding from a higher frequency band to a lower frequency band as echo signals are received from increasing depths, thereby rejecting noise at higher frequencies from greater depths that is typically devoid of anatomical information.

The beamformers for transmission and for reception are implemented in different hardware and can have different functions. Of course, the receiver beamformer is designed to take into account the characteristics of the transmission beamformer. In Fig. 4 only the receiver beamformers 112, 120 are shown, for simplicity. In the complete system, there will also be a transmission chain with a transmission micro beamformer, and a main transmission beamformer.

The function of the micro beamformer 112 is to provide an initial combination of signals in order to decrease the number of analog signal paths. This is typically performed in the analog domain.

The final beamforming is done in the main beamformer 120 and is typically after digitization.

The transmission and reception channels use the same transducer array 106 which has a fixed frequency band. However, the bandwidth that the transmission pulses occupy can vary depending on the transmission beamforming used. The reception channel can capture the whole transducer bandwidth (which is the classic approach) or, by using bandpass processing, it can extract only the bandwidth that contains the desired information (e.g. the harmonics of the main harmonic).

The RF signals may then be coupled to a B mode (i.e. brightness mode, or 2D imaging mode) processor 126 and a Doppler processor 128. The B mode processor 126 performs amplitude detection on the received ultrasound signal for the imaging of structures in the body, such as organ tissue and blood vessels. In the case of line-by-line imaging, each line (beam) is represented by an associated RF signal, the amplitude of which is used to generate a brightness value to be assigned to a pixel in the B mode image. The exact location of the pixel within the image is determined by the location of the associated amplitude measurement along the RF signal and the line (beam) number of the RF signal. B mode images of such structures may be formed in the harmonic or fundamental image mode, or a combination of both as described in US Pat. 6,283,919 (Roundhill et al.) and US Pat. 6,458,083 (Jago et al.) The Doppler processor 128 processes temporally distinct signals arising from tissue movement and blood flow for the detection of moving substances, such as the flow of blood cells in the image field. The Doppler processor 128 typically includes a wall filter with parameters set to pass or reject echoes returned from selected types of materials in the body.

The structural and motion signals produced by the B mode and Doppler processors are coupled to a scan converter 132 and a multi-planar reformatter 144. The scan converter 132 arranges the echo signals in the spatial relationship from which they were received in a desired image format. In other words, the scan converter acts to convert the RF data from a cylindrical coordinate system to a Cartesian coordinate system appropriate for displaying an ultrasound image on an image display 140. In the case of B mode imaging, the brightness of pixel at a given coordinate is proportional to the amplitude of the RF signal received from that location. For instance, the scan converter may arrange the echo signal into a two dimensional (2D) sector-shaped format, or a pyramidal three dimensional (3D) image. The scan converter can overlay a B mode structural image with colors corresponding to motion at points in the image field, where the Doppler-estimated velocities to produce a given color. The combined B mode structural image and color Doppler image depicts the motion of tissue and blood flow within the structural image field. The multi-planar reformatter will convert echoes that are received from points in a common plane in a volumetric region of the body into an ultrasound image of that plane, as described in US Pat. 6,443,896 (Detmer). A volume renderer 142 converts the echo signals of a 3D data set into a projected 3D image as viewed from a given reference point as described in US Pat. 6,530,885 (Entrekin et al.).

The 2D or 3D images are coupled from the scan converter 132, multi-planar reformatter 144, and volume renderer 142 to an image processor 130 for further enhancement, buffering and temporary storage for optional display on an image display 140. The imaging processor may be adapted to remove certain imaging artifacts from the final ultrasound image, such as: acoustic shadowing, for example caused by a strong attenuator or refraction; posterior enhancement, for example caused by a weak attenuator; reverberation artifacts, for example where highly reflective tissue interfaces are located in close proximity; and so on. In addition, the image processor may be adapted to handle certain speckle reduction functions, in order to improve the contrast of the final ultrasound image.

In addition to being used for imaging, the blood flow values produced by the Doppler processor 128 and tissue structure information produced by the B mode processor 126 are coupled to a quantification processor 134. The quantification processor produces measures of different flow conditions such as the volume rate of blood flow in addition to structural measurements such as the sizes of organs and gestational age. The quantification processor may receive input from the user control panel 138, such as the point in the anatomy of an image where a measurement is to be made.

Output data from the quantification processor is coupled to a graphics processor 136 for the reproduction of measurement graphics and values with the image on the display 140, and for audio output from the display device 140. The graphics processor 136 can also generate graphic overlays for display with the ultrasound images. These graphic overlays can contain standard identifying information such as patient name, date and time of the image, imaging parameters, and the like. For these purposes the graphics processor receives input from the user interface 138, such as patient name. The user interface is also coupled to the transmit controller 118 to control the generation of ultrasound signals from the transducer array 106 and hence the images produced by the transducer array and the ultrasound system. The transmit control function of the controller 118 is only one of the functions performed. The controller 118 also takes account of the mode of operation (given by the user) and the corresponding required transmitter configuration and band-pass configuration in the receiver analog to digital converter. The controller 118 can be a state machine with fixed states.

The user interface is also coupled to the multi-planar reformatter 144 for selection and control of the planes of multiple multi-planar reformatted (MPR) images which may be used to perform quantified measures in the image field of the MPR images.

The above described ultrasound system may be operatively coupled with the processing device 32 previously described. For example, the above-described ultrasound system may be used to implement the ultrasound acquisition apparatus 54 of the system 30 shown in Fig. 2 in some examples.

Embodiments of the invention described above employ a processing device. The processing device may in general comprise a single processor or a plurality of processors. It may be located in a single containing device, structure or unit, or it may be distributed between a plurality of different devices, structures or units. Reference therefore to the processing device being adapted or configured to perform a particular step or task may correspond to that step or task being performed by any one or more of a plurality of processing components, either alone or in combination. The skilled person will understand how such a distributed processing device can be implemented. The processing device includes a communication module or input/output for receiving data and outputting data to further components.

The one or more processors of the processing device can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A computer-implemented method (10), comprising:
receiving (14) during an imaging session a medical imaging data stream comprising a series of medical imaging data frames of an anatomical object;
retrieving (16) a segmentation model comprising one or more anatomical segmentation algorithms, the segmentation model configured to receive as input a medical imaging data frame and to generate as output a segmentation result; and
for each medical imaging data frame of the series, performing a segmentation operation (20) comprising:
applying an initialization procedure (22) to initialize the segmentation model,
and
applying (24) the segmentation model to the current medical imaging data frame to obtain a segmentation result for the current medical imaging data frame, and
accessing a segmentation datastore (28) and storing (26) the segmentation result for the current ultrasound data frame in the segmentation datastore,
wherein the initialization procedure (22) comprises:
accessing the segmentation datastore (28);
identifying in the datastore stored segmentation results for at least one previous medical imaging data frame of the current imaging session; and
initializing the segmentation model using the segmentation result for the at least one previous medical imaging data frame of the current imaging session recorded in the segmentation datastore.

2. The method of claim 1, wherein the initialization procedure comprises:
checking whether the segmentation datastore contains a segmentation result for at least one prior ultrasound data frame of the current imaging session, and
if so: initializing the segmentation model using the segmentation result for the at least one previous medical imaging data frame of the current imaging session recorded in the segmentation datastore, and
if not: initializing the segmentation model using a generic initialization state.

3. The method of any of claims 1-2, wherein the segmentation operation further comprises configuring a computational complexity level of the segmentation model in advance of applying the segmentation model.

4. The method of claim 3, wherein the configuring the computational complexity level of the segmentation model comprises switching the model between different computational complexity modes, wherein, in each mode, a different respective set of one or more segmentation algorithms is employed for the anatomical segmentation.

5. The method of claim 4, wherein the segmentation model is configurable in at least a first mode and one or more further modes,
wherein, in the first mode, the segmentation model is configured with a first computational complexity level and is initialized using a generic initialization state; and
wherein, in each of the one or more further modes, the segmentation model is configured with a respective further computational complexity level which is lower than the first computational complexity level and is initialized using a segmentation result for a previous imaging data frame stored in the datastore.

6. The method of claim 5, wherein the one or more further modes include at least two further modes, each with a different respective computational complexity.

7. The method of any of claims 3-6, wherein the segmentation operation further comprises:
retrieving a quality assessment algorithm configured to receive a segmentation result as an input and to determine a quality classification for the segmentation result as an output;
applying the quality assessment algorithm to said at least one segmentation result for a previous ultrasound data frame to obtain a quality classification, and
configuring a computational complexity level of the segmentation model based on the quality classification.

8. The method of claim 7 when dependent on claim 5 or 6, wherein the method comprises a first phase and a second phase,
wherein the first phase comprises:
applying the segmentation model in the first mode for each received frame to obtain a segmentation result,
applying the quality assessment algorithm to each segmentation result, and
continuing in the first phase until the quality classification of at least one frame matches a pre-defined success criterion;
wherein the second phase comprises:
applying the segmentation model in the second mode for each received frame.

9. The method of any of claims 1-8, wherein the one or more algorithms applied by the segmentation model perform steps including fitting a mesh to the medical imaging data, and wherein the initializing the model comprises configuring an initial state of the mesh.

10. The method of any of claims 1-9, wherein the anatomical object is the heart or a portion thereof.

11. The method of any of claims 1-10. wherein the method further comprises generating a control signal for controlling a user interface to display a visualization of each segmentation result.

12. The method of claim 11, wherein the method further comprises controlling the user interface to display a representation of the quality classification of each segmentation result.

13. A computer program product comprising computer program code configured, when run on a processor, to cause the processor to perform a method in accordance with any of claims 1-12.

14. A processing device (32), comprising:
an input/output (34); and
one or more processors (36) configured to:
receive at the input/output during an imaging session a medical imaging data stream comprising a series of medical imaging data frames of an anatomical object;
retrieve a segmentation model comprising one or more anatomical segmentation algorithms, the segmentation model configured to receive as input a medical imaging data frame and to generate as output a segmentation result; and
for each medical imaging data frame of the series, perform a segmentation operation comprising:
applying an initialization procedure to initialize the segmentation model, and
applying the segmentation model to the current medical imaging data frame to obtain a segmentation result for the current medical imaging data frame, and
accessing a segmentation datastore and storing the segmentation result for the current ultrasound data frame in the segmentation datastore,
wherein the initialization procedure comprises:
accessing the segmentation datastore;
identifying in the datastore stored segmentation results for at least one previous medical imaging data frame of the current imaging session; and
initializing the segmentation model using the segmentation result for the at least one previous medical imaging data frame of the current imaging session recorded in the segmentation datastore.

15. A system (30) comprising:
a medical imaging apparatus (54); and
a processing device (32) as claimed in claim 14, operatively coupled with the medical imaging apparatus for receiving the medical imaging data stream.
